# EUROPEAN PATENT SPECIFICATION

(11) **EP 0 822 743 B1**
(45) Date of publication and mention of the grant of the patent: **24.05.2000**
(21) Application number: 97904658.8
(22) Date of filing: 21.02.1997
(51) Int. Cl.: A01K 1/01, A01K 5/02

(54) **A CONSTRUCTION INCLUDING A SHED FOR ANIMALS**
EINE EINEN TIERSTALL ENTHALTENDE KONSTRUKTION
CONSTRUCTION COMPRENANT UNE ETABLE POUR ANIMAUX

(30) Priority: 29.02.1996 NL 1002487
(43) Date of publication of application: 11.02.1998
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL97/00082
(87) International publication number: WO 97/31524

(56) References cited:
- EP-A- 0 400 304
- EP-A- 0 473 051
- WO-A-91/04656
- DE-A- 3 932 034
- FR-A- 2 586 405
- FR-A- 2 632 518
- GB-A- 2 238 564
- NL-A- 301 249
- NL-A- 8 006 788
- NL-A- 8 703 037

## Description

The invention relates to a construction according to the preamble of claim 1.

EP-A-0 400 304 discloses a manually operated device for picking up manure in an animal shed which includes shovel up means and manure suction means.

EP-A-0 473 051 describes a shed with a semi-automatic or automatic manure removal system with active pick-up means. The semi-automatic system has the disadvantage that it requires a person to operate it, which is costly and time-consuming. The automatic manure removal system is operated by a timer switch. This has the disadvantage that the removal system is also operated when this is not strictly necessary which is inefficient. A manure removal system which is applicable only to remove manure from a single pig is presented in DE-39 32 034. This system follows the standing pig and removes the manure before it reaches the shed floor.

The invention aims to improve the construction and to realize an environment-friendly and hygienic shed.

According to the invention, this will be achieved by manure pick-up means which can be active selectively, under computer control, in any place in the shed. By means of the manure pick-up means the manure can be removed very quickly, i.e. in a few minutes, and efficiently from the shed floor. This will reduce the emission of ammonia to a considerable extent.

In accordance with an inventive feature, the manure pick-up means comprise gripping means. Apart from that the manure pick-up means can also comprise a manure suction device and/or shovel-up means. According to an inventive feature, the manure pick-up means are movable in height so that they can be lifted over obstacles, such as animals, fencings and the like. In order to ascertain where the excrements are lying on the shed floor, in accordance with an inventive feature, the cleaning means are provided with a sensor by means of which there can be determined where there is waste material on the shed floor.

According to another inventive feature there are provided in the shed one or more sensors by means of which there can be determined where there is manure in the shed.

The invention additionally relates to a method of removing manure from a shed, characterized in that there is observed by a monitoring system when and where there are deposited excrements in the shed and, as soon as this has been ascertained, the excrements are automatically removed from the shed. In order to realize an effective cleaning of the shed, according to again an other inventive feature, the manure suction device is movable on the floor in a reciprocating manner.

In accordance with a further aspect of the invention, the manure suction device comprises a robot arm construction which, at its upper side, is movable along a rail disposed at a certain height in the shed and which, at its lower side, is provided with a nozzle. The robot arm construction can be moved along the rail through the entire shed. According to a further inventive feature, the robot arm construction is constituted by a container that is movable along the rail, which container includes a manure pump and at least two pivotable arms, of which the lower one is provided with the nozzle. In accordance with an inventive feature, the container comprises a compartment for the manure and a compartment for the cleaning and/or spraying and/or disinfecting fluid. In order to guarantee a proper cleaning of the shed floor, according to an inventive feature, the manure is discharged by an arm of the robot arm construction to the manure compartment, and the cleaning and/or spraying and/or disinfecting fluid is supplied by the other arm of the robot arm construction to a spraying device in the nozzle. In accordance with again an other aspect of the invention, the nozzle is additionally provided with wheels so that it can easily be moved on the shed floor. According to the invention, the nozzle further comprises at least one motor-driven cleaning element, such as a brush. For the purpose of discharging the manure collected in the manure compartment, in accordance with an inventive feature, the construction comprises manure discharge means with the aid of which the manure can be discharged into a manure storage tank, while there are further provided fluid supply means with the aid of which cleaning and/or spraying and/or disinfecting fluid can be supplied to the fluid compartment in the container.

According to an inventive feature, the manure discharge means comprise a manure discharge line, which is capable of being connected to the container of the robot arm construction, as well as a manure pump. For the purpose of connecting the manure discharge line and a fluid supply line to the container, according to an inventive feature, the manure discharge means and the fluid supply means comprise coupling means.

In order to be able to avoid obstacles in the vicinity of the robot arm construction, according to an inventive feature, the cleaning means are provided with detection means.

In accordance with a further inventive feature, the construction is provided with gripping means for picking up fodder. Fodder can be automatically transported with the aid of the gripping means e.g. from a silo to the feed stands. In accordance with an inventive feature, the gripping means can be active selectively in any place in the shed and, according to a further inventive feature, the gripping means are movable in height. In accordance with again an other inventive feature, the gripping means are provided with a sensor by means of which there can be determined whether there is fodder on the shed floor. Furthermore, according to the invention, the height and/or the distribution of the fodder on the shed floor can be determined by means of the sensor. When the fodder has been distributed irregularly, then, by means of the gripper, the fodder can be automatically distributed equally over the feed stands.

According to a further aspect of the invention, the gripping means comprise a robot arm construction, which, at its upper side, is movable along a rail disposed at a certain height in the shed and which, at its lower side, is provided with a gripper. The robot arm construction is constituted by a carrier, that is movable along the rail, and at least two pivotable arms, of which the lower one is provided with the gripper. According to a further inventive feature, the sensor for determining the distribution as well as the height of the fodder is arranged on the carrier of the robot arm construction.

In accordance with an inventive feature, the construction comprises a feed silo from which fodder can be transported by the gripping means to the feed alley. Additionally, according to the invention, along the feed alley there can be provided sensors by means of which the height and/or the distribution of the fodder can be determined.

In a preferred embodiment, the shed is constructed as a loose house having a capacity of approximately hundred animals. For the purpose of automizing the shed, according to an inventive feature, the cleaning means and/or the gripping means are computer-controlled. According to an other inventive feature, the construction comprises a milking robot.

For a better understanding of the invention and to show how the same may be carried into effect, reference will now be made, by way of example, to the accompanying drawings, in which:
Figure 1 shows, in plan view, a construction including a shed, in which there are provided cleaning means for cleaning the shed floor, as well as gripping means for picking up fodder;
Figure 2 shows a side view of a manure suction device, taken on the line II-II in Figure 1;
Figure 3 shows the manure suction device, according to the line III-III in Figure 1;
Figure 4 is an enlarged view of a nozzle of the manure suction device, according to Figures 1 to 3;
Figure 5 is a side view of the nozzle, according to Figure 4;
Figure 6 shows a bottom view of the nozzle, according to Figure 4;
Figure 7 shows gripping means for picking up fodder, according to the side view as indicated by the line VII-VII in Figure 1.

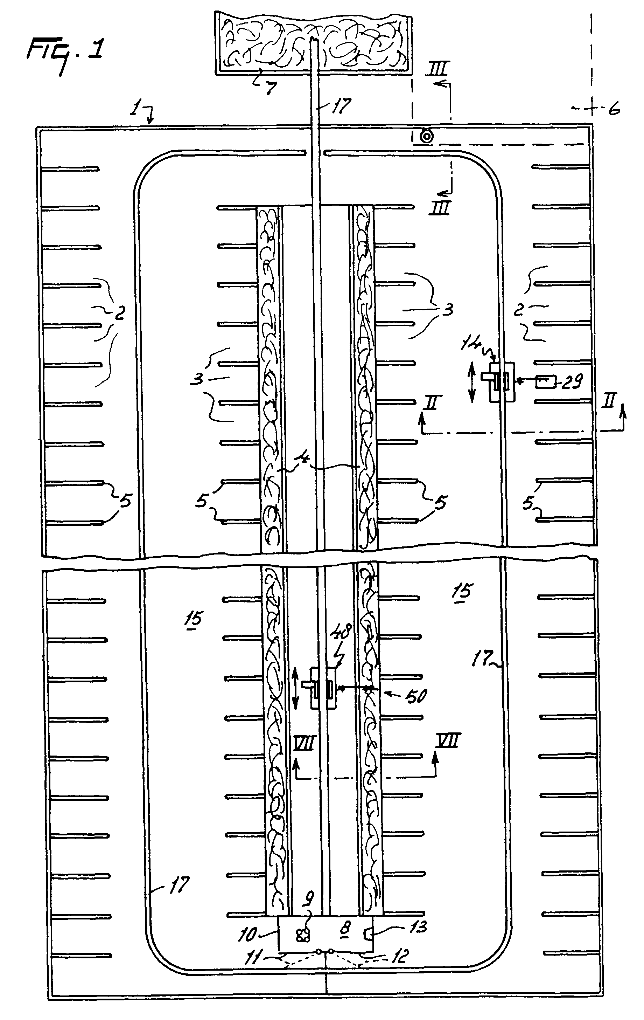

Figure 1 shows, in plan view, a shed 1, provided on both sides with a row of cubicles 2 and in the middle with two rows of feed stands 3 including feed grooves 4. Both the cubicles 2 and the feed stands 3 are mutually separated by means of fencings 5.

Besides the shed 1, the construction further comprises a dung-pit 6 and a feed silo 7. Additionally, at one end of the feed stands 3 there is arranged a milking robot 8, by means of which teat cups 9 can be automatically connected to the teats of an animal to be milked. The milking robot 8 is disposed near a milk box 10, which is provided with an entrance door 11 and an exit door 12. The milk box 10 further comprises a manger 13, in which concentrate can be supplied to the animal.

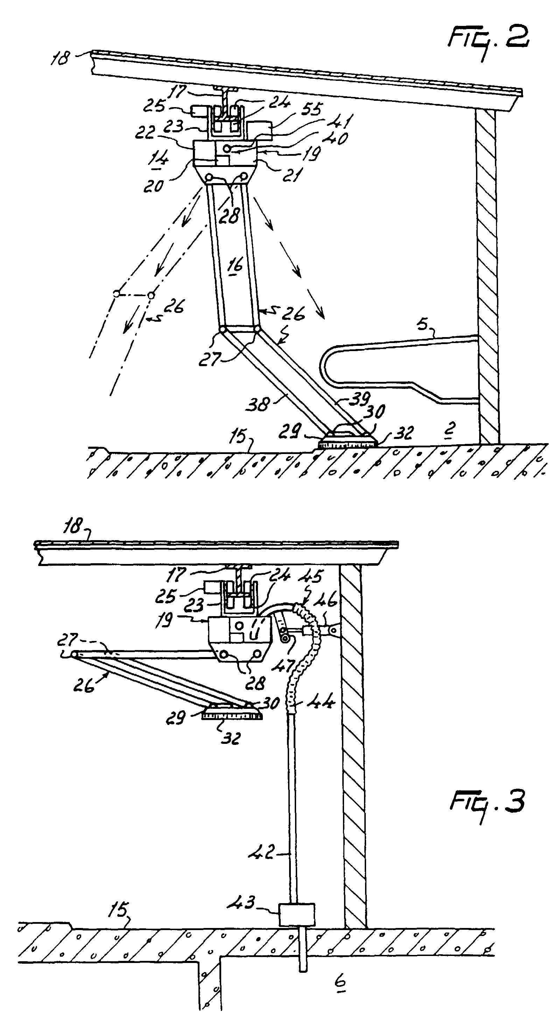

In the shed 1 there are furthermore provided cleaning means 14 for cleaning the shed floor 5. The cleaning means 14 comprise a robot arm construction 16 (Figure 2), which is movable through the shed 1 underneath a rail 17. As shown in Figure 2, the rail 17 is constituted by an I-profile, which is fitted to a roof 18 of the shed 1. The rail 17 extends in the form of a rectangle over the entire shed 1 and is located between the feed stands 3 and the cubicles 2.

As shown in Figure 2, the robot arm construction 16 comprises a container 19 accommodating a manure pump 20, one compartment 21 for the storage of manure and one compartment 22 for the storage of a cleaning and/or spraying and/or disinfecting fluid. At the upper side of the container 19 there is disposed a U-beam 23, which is provided on both sides with one pair of roller elements 24 located at some distance from each other. The distance at which the roller elements 24 are apart from one another corresponds to the thickness of the I-profile of the rail 17. In this manner the roller elements 24 constitute a guide means for the robot arm construction 16 along the rail 17. One roller element 24 can be driven by an electromotor 25, preferably constituted by a step motor, which is drivable in two directions. With the aid of the electromotor 25 the robot arm construction 16 can be moved through the shed.

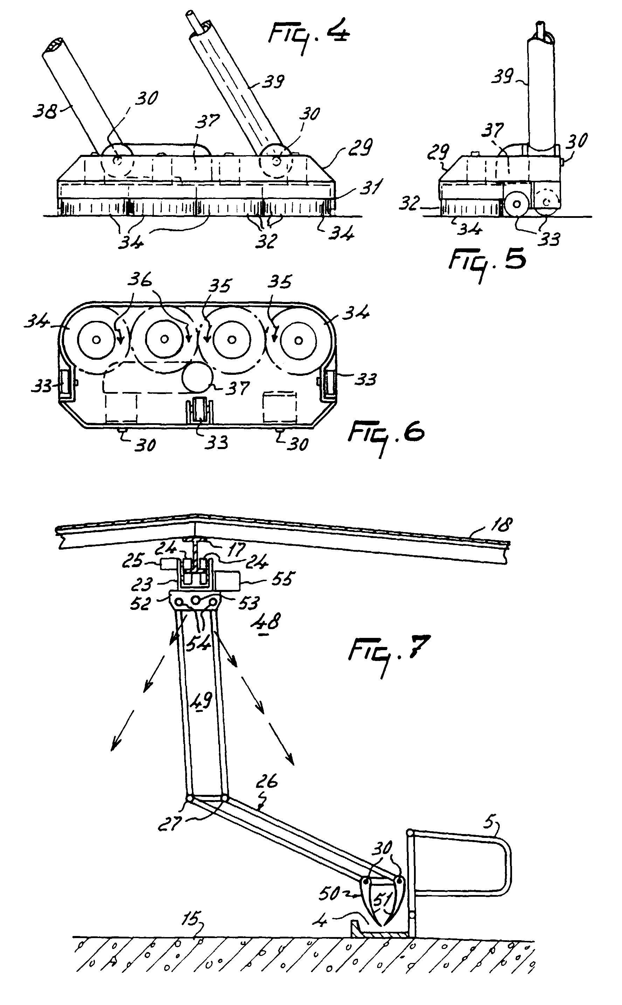

At the lower side of the container 19 there are provided two pivotable arms 26, constituted by two interconnected parallelogram arm constructions. The parallelogram arm constructions 26 are mutually pivotable about shafts 27, while they are pivotable about shafts 28 relative to the container 19. Near the end of the lower parallelogram arm construction 26 there is disposed a nozzle 29 for sucking waste material, such as manure. The nozzle 29 is also pivotable about shafts 30 relative to the parallelogram arm construction 26 (Figure 4). The arms of the parallelogram arm constructions 26 are designed such that via one side of the parallelogram arm construction cleaning and/or spraying and/or disinfecting fluid can be supplied to the nozzle 29, while via the other side of the parallelogram arm constructions manure sucked by the nozzle 29 can be discharged to the compartment 21.

The nozzle 29 has a substantially rectangular shape and is provided at its lower side 31 with a row of brush hairs 32. At one longitudinal side and at the two ends, the nozzle 29 is further supported by wheels 33, the arrangement being such that the brush hairs 32 just do not touch the shed floor 15 (Figure 5). Near the other longitudinal side of the nozzle 29 there are additionally disposed four juxtaposed motor-driven round brushes 34. The round brushes 34 rotate in pairs in the direction of rotation indicated by the arrows 35 and 36 in Figure 6. The two middle brushes 34, of which one rotates clockwise and the other one rotates in the opposite direction, deposit the swept up waste material above an opening 37 of the manure discharge line 38. The cleaning and/or spraying and/or disinfecting fluid supplied via the supply line 39 is sprayed over the brushes 34 by a (non-shown) spraying device. During cleaning the hairs of the brushes 34 just touch the shed floor 15.

To a side wall of the container 19 there are further provided detection means 40 comprising a sensor 41 by means of which obstacles in the vicinity of the robot arm construction 16 can be detected. The sensor 41 can e.g. be designed as a camera. During cleaning of the shed floor 15 the nozzle 29 is moved in a reciprocating manner on the shed floor 15 (dashed line in Figure 2). Furthermore, the robot arm construction 16 is each time shifted a bit along the rail 17, so that each time a strip of the shed floor 15 can be cleaned. Additionally, there can be determined by means of the sensor 41 where the excrements are lying on the shed floor 15. In this manner the robot arm construction 16 is capable of cleaning very selectively the shed floor 15. Additionally, it is possible to clean the entire shed floor 15 with the aid of the robot arm construction 16, e.g. after a determined interval of time or when the animals are in a meadow.

Near the dung-pit 6 there is furthermore provided in the shed a manure discharge line 42 which debouches into the dung-pit 6. In the manure discharge line 42 there is included a manure pump 43, by means of which manure collected in the manure compartment 21 can be pumped into the dung-pit 6. Near its upper end the manure discharge line 42 is provided with a flexible tube 44 which, with the aid of coupling means 45, can be introduced into the manure compartment 21 and be removed therefrom. The coupling means 45 comprise a pneumatically operated cylinder 46 capable of pivoting an arm 47 which is connected with the manure discharge line 42. Additionally, there is provided in the vicinity of the manure discharge line 42 a (non-shown) supply line including coupling means with the aid of which the fluid compartment 22 can be replenished with cleaning and/or spraying and/or disinfecting fluid.

The construction according to the invention is furthermore provided with gripping means 48 for picking up fodder. Like the cleaning means 14, the gripping means 48 are capable of being used in any place in the shed 1. The gripping means 48 also comprise a robot arm construction 49 corresponding to a large extent to the robot arm construction 16 of the cleaning means 14. Therefore, corresponding parts are designated by the same reference numerals and consequently will not be described in detail. The rail 17 along which the robot arm construction 49 can be moved is also fitted to the roof 18 of the shed 1, more in particular in the centre thereof, and extends from the feed silo 7 until the milk box 10. The lower parallelogram arm construction 26 of the robot arm construction 49 is provided with a gripper 50 comprising two curved tines 51, which are pivotable about the shafts 30 by means of a (non-shown) cylinder. The gripper 50 is capable of providing both feed grooves with fodder. The upper parallelogram arm construction 26 is connected with the U-beam 23 by means of a carrier 52. On the beam 52 there are further disposed detection means 53 comprising a sensor 54 by means of which the height and/or the distribution of the fodder in the feed groove 4 can be detected. With the aid of the sensor 54 there can further be ascertained whether there are obstacles in the vicinity of the robot arm construction 49. On the container 19 and the carrier 52 there are furthermore provided computers 55 by means of which the components of the manure pick-up means, such as the electromotor 25, the cylinders of the pivotable arms 26, the drive of the brushes 34, the detection means 40 and 53, the manure pumps 20 and 43, the cylinder 46, etc. can be automatically controlled. In a (non-shown) computer the height as well as the distribution of the fodder in the feed groove 4 can be programmed, so that the fodder is automatically distributed by means of the gripping means 48. In a (non-shown) embodiment, along the feed groove there are additionally provided four sensors by means of which the height and/or the distribution of the fodder can be determined so that, on the basis of these data, the gripping means 48 can be post-controlled.

## Claims

1. A construction including a shed for animals, such as cows, comprising cleaning means (14) capable of being moved through the shed (1) for cleaning the floor (15) thereof, the cleaning means (14) comprising manure pick-up means for automatically cleaning the floor of the shed, characterized in that the manure pick-up means can be active selectively, under computer control, in any place in the shed.

2. A construction as claimed in claim 1, characterized in that the manure pick-up means comprise gripping means and/or a manure suction device and/or shovel-up means.

3. A construction as claimed in any one of the preceding claims, characterized in that the manure pick-up means are movable in height.

4. A construction as claimed in any one of the preceding claims, characterized in tnat the cleaning means are provided with detection means (40) with the aid of which there can be determined whether there is waste material, such as manure, on the shed floor (15).

5. A construction as claimed in any one of the preceding claims, characterized in that there are provided in the shed (1) one or more sensors by means of which there can be determined where there is manure in the shed (1).

6. A construction as claimed in any one of claims 2 - 5, characterized in that the manure suction device is movable on the shed floor (15) in a reciprocating manner.

7. A construction as claimed in any one of claims 2 - 6, characterized in that the manure suction device comprises a robot arm construction (16) which, at its upper side, is movable along a rail (17) disposed at a certain height in the shed (1) and which, at its lower side, is provided with a nozzle (29).

8. A construction as claimed in claim 7, characterized in that the robot arm construction (16) is constituted by a container (19) movable along the rail (17), which container (19) includes a manure pump (20) and at least two pivotable arms (26), of which one is provided with the nozzle (29) for sucking the manure.

9. A construction as claimed in claim 8, characterized in that the container comprises a compartment (21) for manure and a compartment (22) for cleaning and/or spraying and/or disinfecting fluid.

10. A construction as claimed in claim 8 or 9, characterized in that the manure is discharged by an arm of the robot arm construction (16) to the manure compartment (21), and the cleaning and/or spraying and/or disinfecting fluid is supplied by the other arm of the robot arm construction to a spraying device in the nozzle (29).

11. A construction as claimed in any one of claims 7 to 10, characterized in that the nozzle (29) is provided with wheels (33).

12. A construction as claimed in any one of claims 7 to 11, characterized in that in the nozzle (29) there is provided at least one motor-driven cleaning element (39), such as one or more brushes.

13. A construction as claimed in any one of claims 2 - 12, characterized in that the construction comprises manure discharge means with the aid of which manure collected by the manure suction device can be discharged into a manure storage tank (6), as well as fluid supply means with the aid of which cleaning and/or spraying and/or disinfecting fluid can be supplied to the container (19).

14. A construction as claimed in claim 13, characterized in that the manure discharge means comprise a manure discharge line (42), capable of being connected to the container (19) of the robot arm construction (16), as well as a manure pump (43).

15. A construction as claimed in claim 14, characterized in that the manure discharge means and the fluid supply means comprise coupling means (45) by means of which the manure discharge line (42) and a fluid supply line can be connected to the container (19).

16. A construction as claimed in any one of the preceding claims, characterized in that the cleaning means are provided with detection means (53) for detecting obstacles in the vicinity of the robot arm construction (16).

17. A construction as claimed in any one of the preceding claims, characterized in that the construction is provided with gripping means (48) for picking up fodder.

18. A construction as claimed in claim 17, characterized in that the gripping means (48) can be active selectively in any place in the shed (1).

19. A construction as claimed in any one of claims 17 or 18, characterized in that the gripping means (48) are movable in height.

20. A construction as claimed in any one of claims 17 to 19, characterized in that the gripping means (48) are provided with detection means (53) by means of which there can be determined whether there is fodder on the shed floor (15).

21. A construction as claimed in claim 20, characterized in that by means of the detection means (53) the height and/or the distribution of the fodder on the shed floor (15) can be determined.

22. A construction as claimed in any one of claims 17 to 21, characterized in that the gripping means (48) comprise a robot arm construction (16) which, at its upper side, is movable along a rail (17) disposed at a certain height in the shed (1) and, at its lower side, is provided with a gripper (50).

23. A construction as claimed in claim 22, characterized in that the robot arm construction (16) is constituted by a carrier (52) movable along the rail (17), and comprises at least two pivotable arms, of which the lower one is provided with the gripper (50).

24. A construction as claimed in any one of claims 17 to 23, characterized in that the detection means (53) for determining the distribution and/or the height of the fodder are arranged on the carrier (52) of the robot arm construction (16).

25. A construction as claimed in any one of claims 17 to 24, characterized in that the construction comprises a feed silo (7) from which the fodder can be transported by the gripping means (48) to a feed alley.

26. A construction as claimed in any one of claims 17 to 25, characterized in that along the feed alley there are provided detection means by means of which the height and/or the distribution of the fodder can be determined.

27. A construction as claimed in any one of the preceding claims, characterized in that the shed (1) is constructed as a loose house having a capacity of approximately hundred animals.

28. A construction as claimed in any one of claims 2 - 27, characterized in that the cleaning means (19) and/or the gripping means (48) are computer-controlled.

29. A construction as claimed in any one of the preceding claims, characterized in that the construction comprises a milking robot (8).

30. A method of removing manure from a shed as claimed in any one of the preceding claims, characterized in that there is observed by a monitoring system when and where there are deposited excrements in the shed and, as soon as this has been ascertained, the excrements are automatically removed from the shed.

## Patentansprüche

1. Vorrichtung mit einem Stall für Tiere, wie z. B. Kühe, mit einer Reinigungsvorrichtung (14), die zur Reinigung des Bodens (15) durch den Stall (1) zu bewegen ist, wobei die Reinigungsvorrichtung (14) eine Mistaufnahmevorrichtung zur automatischen Reinigung des Stallbodens aufweist,
dadurch gekennzeichnet, daß die rechnergesteuerte Mistaufnahmevorrichtung wahlweise an jeder beliebigen Stelle des Stalles einsetzbar ist.

2. Vorrichtung nach Anspruch 1,
dadurch gekennzeichnet, daß die Mistaufnahmevorrichtung eine Greifvorrichtung und/oder eine Mistansaugvorrichtung und/oder eine Schaufelaufnahmevorrichtung aufweist.

3. Vorrichtung nach einem der vorhergehenden Ansprüche,
dadurch gekennzeichnet, daß die Mistaufnahmevorrichtung höhenbewegbar ist.

4. Vorrichtung nach einem der vorhergehenden Ansprüche,
dadurch gekennzeichnet, daß die Reinigungsvorrichtung eine Ermittlungsvorrichtung (40) aufweist, mittels der feststellbar ist, ob sich Abfall, wie z. B. Mist, auf dem Stallboden (15) befindet.

5. Vorrichtung nach einem der vorhergehenden Ansprüche,
dadurch gekennzeichnet, daß in dem Stall (1) ein oder mehrere Sensoren angeordnet sind, mittels derer feststellbar ist, wo sich in dem Stall (1) Mist befindet.

6. Vorrichtung nach einem der Ansprüche 2 bis 5,
dadurch gekennzeichnet, daß die Mistansaugvorrichtung auf dem Stallboden (15) hin- und herbewegbar ist.

7. Vorrichtung nach einem der Ansprüche 2 bis 6,
dadurch gekennzeichnet, daß die Mistansaugvorrichtung eine Roboterarm-Vorrichtung (16) aufweist, die an ihrem oberen Ende auf einer Schiene (17) verschiebbar ist, welche in einer bestimmten Höhe in dem Stall (1) angeordnet ist, und die an ihrem unteren Ende eine Düse (29) aufweist.

8. Vorrichtung nach Anspruch 7,
dadurch gekennzeichnet, daß die Roboterarm-Vorrichtung (16) durch einen auf der Schiene (17) verschiebbaren Behälter (19) gebildet ist, der eine Mistpumpe (20) und mindestens zwei schwenkbare Arme (26) aufweist, von denen einer mit einer Düse (29) zum Ansaugen des Mists versehen ist.

9. Vorrichtung nach Anspruch 8,
dadurch gekennzeichnet, daß der Behälter eine Kammer (21) für Mist und eine Kammer (22) für Reinigungs- und/oder Sprüh- und/oder Desinfektionsflüssigkeit aufweist.

10. Vorrichtung nach Anspruch 8 oder 9,
dadurch gekennzeichnet, daß der Mist durch einen Arm der Roboterarm-Vorrichtung (16) in die Mistkammer (21) befördert wird, und daß die Reinigungs- und/oder Sprüh- und/oder Desinfektionsflüssigkeit durch den anderen Arm der Roboterarm-Vorrichtung einer Sprühvorrichtung in der Düse (29) zugeführt wird.

11. Vorrichtung nach einem der Ansprüche 7 bis 10,
dadurch gekennzeichnet, daß die Düse (29) mit Rädern (33) versehen ist.

12. Vorrichtung nach einem der Ansprüche 7 bis 11,
dadurch gekennzeichnet, daß in der Düse (29) mindestens ein angetriebenes Reinigungselement (39), wie z. B. eine oder mehrere Bürsten, angeordnet ist.

13. Vorrichtung nach einem der Ansprüche 2 bis 12,
dadurch gekennzeichnet, daß die Vorrichtung eine Mistentsorgungsvorrichtung aufweist, mittels der von der Mistansaugvorrichtung aufgenommener Mist in einen Mistaufnahmeraum (6) abzuleiten ist, sowie eine Flüssigkeitszuführvorrichtung, mittels der dem Behälter (19) eine Reinigungs- und/oder Sprüh- und/oder Desinfektionsflüssigkeit zuzuführen ist.

14. Vorrichtung nach Anspruch 13,
dadurch gekennzeichnet, daß die Mistentsorgungsvorrichtung eine Mistentsorgungsleitung (42) aufweist, die an den Behälter (19) der Roboterarm-Vorrichtung (16) anschließbar ist, sowie eine Mistpumpe (43).

15. Vorrichtung nach Anspruch 14,
dadurch gekennzeichnet, daß die Mistentsorgungsvorrichtung und die Flüssigkeitszuführvorrichtung Anschlußvorrichtungen (45) aufweisen, mittels derer die Mistentsorgungsleitung (42) und eine Flüssigkeitszuführleitung an den Behälter (19) anzuschließen sind.

16. Vorrichtung nach einem der vorhergehenden Ansprüche,
dadurch gekennzeichnet, daß die Reinigungsvorrichtung eine Ermittlungsvorrichtung (53) zur Ermittlung von Hindernissen in der Umgebung der Roboterarm-Vorrichtung (16) aufweist.

17. Vorrichtung nach einem der vorhergehenden Ansprüche,
dadurch gekennzeichnet, daß die Vorrichtung eine Greifvorrichtung (48) zur Aufnahme von Futter aufweist.

18. Vorrichtung nach Anspruch 17,
dadurch gekennzeichnet, daß die Greifvorrichtung (48) wahlweise an jeder beliebigen Stelle des Stalles (1) einsetzbar ist.

19. Vorrichtung nach einem der Ansprüche 17 oder 18,
dadurch gekennzeichnet, daß die Greifvorrichtung (48) höhenbewegbar ist.

20. Vorrichtung nach einem der Ansprüche 17 bis 19,
dadurch gekennzeichnet, daß die Greifvorrichtung (48) eine Ermittlungsvorrichtung (53) aufweist, mittels der feststellbar ist, ob sich Futter auf dem Stallboden (15) befindet.

21. Vorrichtung nach Anspruch 20,
dadurch gekennzeichnet, daß mittels der Ermittlungsvorrichtung (53) die Höhe und/oder die Verteilung des Futters auf dem Stallboden (15) feststellbar ist.

22. Vorrichtung nach einem der Ansprüche 17 bis 21,
dadurch gekennzeichnet, daß die Greifvorrichtung (48) eine Roboterarm-Vorrichtung (16) aufweist, die an ihrem oberen Ende auf einer Schiene (17) verschiebbar ist, welche in einer bestimmten Höhe in dem Stall (1) angeordnet ist, und die an ihrem unteren Ende mit einem Greifer (50) versehen ist.

23. Vorrichtung nach Anspruch 22,
dadurch gekennzeichnet, daß die Roboterarm-Vorrichtung (16) durch einen auf der Schiene (17) verschiebbaren Träger (52) gebildet ist und mindestens zwei schwenkbare Arme aufweist, von denen der untere mit dem Greifer (50) versehen ist.

24. Vorrichtung nach einem der Ansprüche 17 bis 23,
dadurch gekennzeichnet, daß die Ermittlungsvorrichtung (53) zur Ermittlung der Verteilung und/oder der Höhe des Futters an dem Träger (52) der Roboterarm-Vorrichtung (16) angeordnet ist.

25. Vorrichtung nach einem der Ansprüche 17 bis 24,
dadurch gekennzeichnet, daß die Vorrichtung einen Futtersilo (7) aufweist, aus dem das Futter von der Greifvorrichtung (48) zu einem Futtergang zu befördern ist.

26. Vorrichtung nach einem der Ansprüche 17 bis 25,
dadurch gekennzeichnet, daß längs des Futterganges Ermittlungsvorrichtungen angeordnet sind, mittels derer die Höhe und/oder die Verteilung des Futters feststellbar ist.

27. Vorrichtung nach einem der vorhergehenden Ansprüche,
dadurch gekennzeichnet, daß der Stall (1) als Laufstall mit einer Kapazität von etwa einhundert Tieren ausgeführt ist.

28. Vorrichtung nach einem der Ansprüche 2 bis 27,
dadurch gekennzeichnet, daß die Reinigungsvorrichtung (14) und/oder die Greifvorrichtung (48) rechnergesteuert sind.

29. Vorrichtung nach einem der vorhergehenden Ansprüche,
dadurch gekennzeichnet, daß die Vorrichtung einen Melkroboter (8) aufweist.

30. Verfahren zum Entfernen von Mist aus einem Stall nach einem der vorhergehenden Ansprüche,
dadurch gekennzeichnet, daß von einer Überwachungsvorrichtung überwacht wird, wann und wo Ausscheidungen in dem Stall abgelegt werden, und daß nach dem Feststellen von Ausscheidungen diese automatisch aus dem Stall entfernt werden.

## Revendications

1. Installation comportant une étable pour animaux, tels que des vaches, comportant des moyens de nettoyage (14) pouvant être déplacés à travers l'étable (1) pour nettoyer le sol (15) de celle-ci, les moyens de nettoyage (14) comportant des moyens d'enlèvement de fumier pour nettoyer de manière automatique le sol de l'étable, caractérisée en ce que les moyens d'enlèvement de fumier peuvent être activés sélectivement, sous une commande par ordinateur, à tout emplacement de l'étable.

2. Installation selon la revendication 1, caractérisée en ce que les moyens d'enlèvement de fumier comportent des moyens de saisie et/ou des moyens d'aspiration et/ou des moyens de pelletage de fumier.

3. Installation selon l'une quelconque des revendications précédentes, caractérisée en ce que les moyens d'enlèvement de fumier sont mobiles en hauteur.

4. Installation selon l'une quelconque des revendications précédentes, caractérisée en ce que les moyens de nettoyage sont munis de moyens de détection (40) à l'aide desquels il peut être déterminé s'il existe du matériau de déchets, tel que du fumier, sur le sol de l'étable (15).

5. Installation selon l'une quelconque des revendications précédentes, caractérisée en ce que dans l'étable (1) sont agencés un ou plusieurs détecteurs par l'intermédiaire desquels il peut être déterminé s'il y a du fumier dans l'étable (1).

6. Installation selon l'une quelconque des revendications 2 à 5, caractérisée en ce que le dispositif d'aspiration de fumier est mobile sur le sol (15) de l'étable d'une manière en va-et-vient.

7. Installation selon l'une quelconque des revendications 2 à 6, caractérisée en ce que le dispositif d'aspiration de fumier comporte un système de bras de robot (16) qui, au niveau de son côté supérieur, est mobile le long d'un rail (17) disposé à une certaine hauteur dans l'étable (1) et qui, au niveau de son côté inférieur, est muni d'une buse (29).

8. Installation selon la revendication 7, caractérisée en ce que le système de bras de robot (16) est constitué par un conteneur (19) mobile le long du rail (17), lequel conteneur (19) comporte une pompe à fumier (20) et au moins deux bras pouvant pivoter (26), dont un est muni de la buse (29) destinée à aspirer le fumier.

9. Installation selon la revendication 8, caractérisée en ce que le conteneur comporte un compartiment (21) destiné au fumier et un compartiment (22) pour du fluide de nettoyage et/ou de pulvérisation et/ou de désinfection.

10. Installation selon la revendication 8 ou 9, caractérisée en ce que le fumier est évacué par un bras du système de bras de robot (16) vers le compartiment de fumier (21), et le fluide de nettoyage et/ou pulvérisation et/ou désinfection est alimenté par l'autre bras du système de bras de robot vers un dispositif de pulvérisation situé dans la buse (29).

11. Installation selon l'une quelconque des revendications 7 à 10, caractérisée en ce que la buse (29) est munie de roues (33).

12. Installation selon l'une quelconque des revendications 7 à 11, caractérisée en ce que dans la buse (29) est agencé au moins un élément de nettoyage entraîné par moteur (39), tel qu'une ou plusieurs brosses.

13. Installation selon l'une quelconque des revendications 2 à 12, caractérisée en ce que l'installation comporte des moyens d'évacuation de fumier à l'aide desquels du fumier recueilli par le dispositif d'aspiration de fumier peut être évacué dans un réservoir de stockage de fumier (6), ainsi que des moyens d'alimentation en fluide à l'aide desquels un fluide de nettoyage et/ou de pulvérisation et/ou de désinfection peut être alimenté vers le conteneur ( 19).

14. Installation selon la revendication 13, caractérisée en ce que les moyens d'évacuation de fumier comportent une ligne d'évacuation de fumier (42) pouvant être reliée au conteneur (19) du système de bras de robot (16), ainsi qu'une pompe à fumier (43).

15. Installation selon la revendication 14, caractérisée en ce que les moyens d'évacuation de fumier et les moyens d'alimentation en fluide comportent des moyens d'accouplement (45) par l'intermédiaire desquels la ligne d'évacuation de fumier (42) et une ligne d'alimentation en fluide peuvent être reliées au conteneur (19).

16. Installation selon l'une quelconque des revendications précédentes, caractérisée en ce que les moyens de nettoyage sont munis de moyens de détection (53) pour détecter des obstacles situés au voisinage du système du bras de robot (16).

17. Installation selon l'une quelconque des revendications précédentes, caractérisée en ce que l'installation est munie de moyens de saisie (48) pour prélever du fourrage.

18. Installation selon la revendication 17, caractérisée en ce que les moyens de saisie (48) peuvent être activés de manière sélective à tout emplacement de l'étable (1).

19. Installation selon la revendication 17 ou 18, caractérisée en ce que les moyens de saisie (48) sont mobiles en hauteur.

20. Installation selon l'une quelconque des revendications 17 à 19, caractérisée en ce que les moyens de saisie (48) sont munis de moyens de détection (53) par l'intermédiaire desquels il peut être déterminé s'il existe du fourrage sur le sol (15) de l'étable.

21. Installation selon la revendication 20, caractérisée en ce que par l'intermédiaire des moyens de détection (53), la hauteur et/ou la répartition du fourrage sur le sol (15) de l'étable peuvent être déterminées.

22. Installation selon l'une quelconque des revendications 17 à 21, caractérisée en ce que les moyens de saisie (48) comportent un système de bras de robot (16) qui, au niveau de son côté supérieur, est mobile le long d'un rail (17) disposé à une certaine hauteur dans l'étable (1) et, au niveau de son côté inférieur, est munie d'un dispositif de saisie (50).

23. Installation selon la revendication 22, caractérisée en ce que le système de bras de robot (16) est constituée par un support (52) mobile le long du rail (17), et comporte au moins deux bras pouvant pivoter, dont le bras inférieur est muni du dispositif de saisie (50).

24. Installation selon l'une quelconque des revendications 17 à 23, caractérisée en ce que les moyens de détection (53) pour déterminer la répartition et/ou la hauteur du fourrage sont agencés sur le support (52) du système de bras de robot (56).

25. Installation selon l'une quelconque des revendications 17 à 24, caractérisée en ce que l'installation comporte un silo d'alimentation (7) à partir duquel le fourrage peut être transporté par les moyens de saisie (48) vers une allée d'alimentation.

26. Installation selon l'une quelconque des revendications 17 à 25, caractérisée en ce que le long de l'allée d'alimentation sont agencées des moyens de détection par l'intermédiaire desquels la hauteur et/ou la répartition du fourrage peuvent être déterminées.

27. Installation selon l'une quelconque des revendications précédentes, caractérisée en ce que l'étable (1) est construite sous la forme d'un bâtiment ouvert ayant une capacité d'approximativement 100 animaux.

28. Installation selon l'une quelconque des revendications 2 à 27, caractérisée en ce que les moyens de nettoyage (19) et/ou les moyens de saisie (48) sont commandés par ordinateur.

29. Installation selon l'une quelconque des revendications précédentes, caractérisée en ce que l'installation comporte un robot de traite (8).

30. Procédé d'enlèvement de fumier à partir d'une étable selon l'une quelconque des revendications précédentes, caractérisé en ce qu'il est observé par un système de surveillance à quel moment et à quel emplacement des excréments sont déposés dans l'étable et, aussitôt que ceci a été confirmé, les excréments sont automatiquement enlevés de l'étable.
